# EUROPÄISCHE PATENTSCHRIFT

(11) **EP 2 203 720 B1**
(45) Veröffentlichungstag und Bekanntmachung des Hinweises auf die Patenterteilung: **16.04.2014**
(21) Anmeldenummer: 08802685.1
(22) Anmeldetag: 27.09.2008
(51) Int. Cl.: G01D 5/347

(54) **DETEKTORELEMENT-MATRIX FÜR EINE OPTISCHE POSITIONSMESSEINRICHTUNG**
DETECTOR ELEMENT MATRIX FOR AN OPTICAL POSITION MEASURING DEVICE
MATRICE À ÉLÉMENT DÉTECTEUR POUR DISPOSITIF DE MESURE DE POSITION OPTIQUE

(30) Priorität: 20.10.2007 DE 102007050253
(43) Veröffentlichungstag der Anmeldung: 07.07.2010
(73) Patentinhaber: Dr. Johannes Heidenhain GmbH, 83301 Traunreut (DE)
(72) Erfinder: OBERHAUSER, Johann, 83377 Vachendorf (DE)
(86) Internationale Anmeldenummer: PCT/EP2008/008245
(87) Internationale Veröffentlichungsnummer: WO 2009/049761

(56) Entgegenhaltungen:
- DE-A1- 4 002 431
- DE-A1- 4 332 859
- DE-A1- 19 754 626
- US-A- 4 827 145
- US-A1- 2007 170 355

## Beschreibung

Die vorliegende Erfindung betrifft ein Detektorelement-Array für eine optische Positionsmesseinrichtung.

Bekannte optische Positionsmesseinrichtungen umfassen üblicherweise eine Maßverkörperung sowie eine hierzu in einer Messrichtung bewegliche Abtasteinheit. Die Abtasteinheit und die Maßverkörperung sind mit zwei Objekten verbunden, deren Relativ- und/oder Absolutposition zueinander bestimmt werden soll. Im Fall einer Längenmessung ist die Maßverkörperung als Linear-Maßstab mit einer sich in Messrichtung erstreckenden Messteilung ausgebildet, im Fall einer rotatorischen Messung ist die Maßverkörperung als Teilscheibe mit einer kreisringförmigen Messteilung ausgebildet. Die Abtasteinheit umfasst in der Regel neben einer oder mehreren Lichtquellen und optischen Elementen, wie z.B. Linsen, Abtastgittern etc. ferner eine Detektoranordnung. Über die Detektoranordnung wird im Fall einer inkrementalen Positionsmesseinrichtung ein periodisches Streifenmuster in einer Detektionsebene abgetastet, das in Abhängigkeit der Relativbewegung von Maßverkörperung und Abtasteinheit moduliert wird. Am Ausgang der Detektoranordnung stehen verschiebungsabhängig modulierte Abtastsignale zur Weiterverarbeitung in einer Folgeelektronik zur Verfügung.

In der Detektoranordnung kommen hierbei zunehmend so genannte Detektorelement-Arrays zum Einsatz. Derartige Detektorelement-Arrays bestehen aus einer Vielzahl von schmalen, zumeist rechteckförmigen Photodioden, die in Messrichtung benachbart zueinander angeordnet und geeignet verschaltet sind. Üblich ist hierbei, dass diejenigen Photodioden miteinander verschaltet werden, die bei der Abtastung der Maßverkörperung phasengleiche Abtastsignale liefern.

Mit dem Design und der Anpassung derartiger Detektorelement-Arrays an unterschiedliche Abtastkonfigurationen ist nunmehr ein relativ großer Aufwand verbunden. Von daher existiert bereits seit längerem die Anforderung, ein derartiges Detektorelement-Array für unterschiedlichste Abtastkonfigurationen vorzusehen, an die das Detektorelement-Array flexibel angepasst werden kann.

So ist beispielsweise aus der EP 1 308 700 A2 der Anmelderin bekannt, dass mit Hilfe eines geeignet ausgebildeten Detektorelement-Arrays Maßverkörperungen mit unterschiedlicher Teilungsperiode respektive Auflösung abgetastet werden können. In der EP 1 630 528 A2 ist darüber hinaus offenbart, wie ebenfalls mit Hilfe eines einzigen Detektorelement-Arrays Kreisteilungen mit unterschiedliche Radien abgetastet werden können. In beiden Fällen ist jeweils ein Detektorelement-Array mit länglichen Photodioden vorgesehen, die durch eine geeignete Verschaltung an unterschiedliche Abtastkonfigurationen anpassbar sind. Die Anpassbarkeit der jeweiligen Detektorelement-Arrays an verschiedene Abtastkonfigurationen ist jedoch nur in beschränktem Umfang möglich.

Aus der gattungsgemäßen DE 197 54 626 C2, von der bei der Bildung des Oberbegriff des Anspruchs 1 der vorliegenden Anmeldung ausgegangen wird, ist darüber hinaus eine programmierbare, optisch sensitive Schaltung bekannt, die eine nochmals deutlich flexiblere Auslegung eines Detektorelement-Arrays für unterschiedliche Abtastkonfigurationen ermöglicht. Hierzu umfasst die entsprechende Schaltung bzw. das Detektorelement-Array eine matrixartige Anordnung von einzelnen Detektorelementen bzw. optisch sensitiven Bauelementen. Jedem Detektorelement sind in den dargestellten Ausführungsbeispielen jeweils 4 Schalter zugeordnet, über die jedes Detektorelement wahlweise mit vier unmittelbar horizontal und vertikal benachbarten Detektorelementen verbindbar ist. Jedem Schalter ist ferner ein Speicherelement zugeordnet, in dem Informationen ablegbar sind, die angeben, mit welchen Detektorelementen über die jeweiligen Schalter das jeweilige Detektorelement in der eingestellten Abtastkonfiguration verbunden ist. Die in dieser Druckschrift vorgeschlagene Lösung ermöglicht nunmehr zwar eine nochmals verbesserte flexible Anpassung des Detektorelement-Arrays an verschiedene Abtastkonfigurationen, jedoch erfordert diese aufgrund der Vielzahl von Schaltern und Speicherelementen einen relativ hohen schaltungstechnischen Aufwand. So ist etwa die Verschaltung zweier schräg benachbarter Detektorelemente nur über eine Vielzahl erforderlicher Schalter und programmierbarer Schaltungseinrichtungen möglich. Zudem verringert sich aufgrund der aufwendigen Schaltung die Anzahl der verfügbaren Detektorelemente pro Fläche, d.h. es resultiert nur eine relativ kleine Pixeldichte.

Aufgabe der vorliegenden Erfindung ist es daher, ein Detektorelement-Array für eine optische Positionsmesseinrichtung anzugeben, welches eine große Pixeldichte besitzt, flexibel an verschiedenste Abtastkonfigurationen anpassbar ist und keinen großen schaltungstechnischen Aufwand erfordert.

Diese Aufgabe wird erfindungsgemäß durch ein Detektorelement-Array für eine optische Positionsmesseinrichtung mit den Merkmalen des Anspruchs 1 gelöst.

Vorteilhafte Ausführungen des erfindungsgemäßen Detektorelement-Arrays für eine optische Positionsmesseinrichtung ergeben sich aus den Maßnahmen in den von Anspruch 1 abhängigen Ansprüchen.

Erfindungsgemäß ist nunmehr vorgesehen, insbesondere die Zahl der erforderlichen Schalter und damit auch der nötigen Speicherelemente pro Detektorelement deutlich zu reduzieren, indem lediglich eine unmittelbare Verbindbarkeit unterschiedlicher Detektorelemente in begrenztem Umfang vorgesehen wird. Dies ist deshalb möglich, da grundsätzlich bekannt ist, welche grundsätzlichen Geometrien das abgetastete Streifenmuster in den verschiedenen Anwendungsfällen aufweisen kann. Im Fall einer Längenmesseinrichtung handelt es sich in der Regel um ein paralleles Streifenmuster, im Fall einer rotatorischen Messeinrichtung liegt üblicherweise ein Streifenmuster mit winklig angeordneten Streifen vor. Es ist demzufolge erfindungsgemäß ausreichend, die unmittelbare Verbindbarkeit der Detektorelemente über die Schalter auf diese beiden grundsätzlichen Abtastkonfigurationen zu beschränken. Insbesondere hinsichtlich der Abtastung eines winkligen Streifenmusters wird eine unmittelbare Verbindbarkeit von schräg beachbarten Detektorelementen über einen entsprechenden Schalter vorgesehen.

Als Vorteil der erfindungsgemäßen Lösung resultiert im Vergleich zum Stand der Technik ein Detektorelement-Array mit erheblich geringerem schaltungstechnischen Aufwand; sowohl die Zahl der benötigten Schalter und Verbindungsleitungen als auch der erforderlichen Speicherelemente kann deutlich reduziert werden. Ferner ist aufgrund des reduzierten Schaltungsaufwands eine höhere Pixeldichte als bei Anordnungen gemäß dem Stand der Technik erreichbar, d.h. letztlich eine wesentlich vergrößerte optische Auflösung bei der Abtastung. Wegen des günstigeren Verhältnisses der verfügbaren Detektorelement-Fläche zur benötigten Fläche der Speicherelemente und der Schalter ist zudem eine höhere Photostrom-Ausbeute pro Detektorelement-Fläche die Folge. Bei der Abtastung ergibt sich somit eine bessere Signalqualität bei gleicher Gesamtfläche des Detektorelement-Arrays.

Desweiteren sei erwähnt, dass das erfindungsgemäße Detektorelement-Array natürlich nicht nur in Verbindung mit inkrementalen Positionsmesseinrichtungen und periodischen Messteilungen einsetzbar ist, sondern auch mit absoluten Positionsmesseinrichtungen, bei denen beispielsweise ein Pseudo-Random-Code zur Positionsbestimmung abgetastet wird.

Das erfindungsgemäße Detektorelement-Array für eine optische Positionsmesseinrichtung über das ein in einer Detektionsebene resultierendes Streifenmuster in elektrische Abtastsignale umsetzbar ist, besteht aus mehreren, matrixartig in Zeilen und Spalten angeordneten lichtempfindlichen Detektorelementen. Zumindest einem Teil der Detektorelemente sind nicht mehr als zwei Schalter zugeordnet, über die die jeweiligen Detektorelemente wahlweise mit ein oder mehreren benachbarten Detektorelementen verbindbar ist. Zumindest einem Teil der Detektorelemente mit zugeordneten Schaltern ist ein Speicherelement zugeordnet, in dem Informationen ablegbar sind, die angeben, mit welchen benachbarten Detektorelementen über die nicht mehr als zwei Schalter das jeweilige Detektorelement unmittelbar in einer eingestellten Abtastkonfiguration verbunden ist. Über die zwei Schalter ist wahlweise eine unmittelbare Verbindung zu einem benachbarten Detektorelement in der gleichen Spalte und/oder eine unmittelbare Verbindung zu einem schräg benachbarten Detektorelement in einer benachbarten Spalte einer benachbarten Zeile herstellbar.

Vorteilhafterweise sind seitlich benachbart zum Detektorelement-Array mehrere Verbindungsleitungen angeordnet, mit denen jeweils eine über die Schalter verbundene Gruppe von Detektorelementen verbindbar ist,

Hierbei ist es möglich, dass die Detektorelemente einer Gruppe aus der Abtastung des Streifenmusters jeweils phasengleiche Abtastsignale erzeugen.

In einer möglichen Ausführungsform ist zwischen den Verbindungsleitungen und dem Detektorelement-Array ein Kanal-Multiplexer angeordnet, über den die verbundenen Detektorelemente der Gruppen mit phasengleichen Abtastsignalen jeweils auf die gleiche Verbindungsleitung aufschaltbar sind.

Hierbei können die Detektorelemente dergestalt verschaltet sein, dass an vier Verbindungsleitungen vier um 90° phasenversetzte Abtastsignale oder an drei Verbindungsleitungen drei um 120° phasenversetzte Abtastsignale anliegen.

Es ist möglich, dass jedes Speicherelement mit den zwei Schaltern über jeweils eine Steuerleitung verbunden ist.

Dabei kann jedes Speicherelement einen invertierenden und einen nicht-invertierenden Ausgang besitzen und jeder der Ausgänge mit einer Steuerleitung verbunden sein.

Vorteilhafterweise können Programmierleitungen zwischen den Spalten und Zeilen der Detektorelemente angeordnet und zum Ansteuern der Speicherelemente mit diesen verbunden sein, um darüber die Schalter wahlweise zu betätigen.

Zur Abtastung eines periodischen Streifenmusters aus parallelen Streifen können über die Schalter jeweils nur Detektorelemente in einer Spalte miteinander verbunden sein.

Zur Abtastung eines periodischen Streifenmusters aus winklig angeordneten Streifen kann das das Detektorelement-Array zwei spiegelsymmetrisch zu einer Symmetrieachse ausgebildete Hälften aufweisen, wobei bei Betrachtung aus Richtung der Symmetrieachse
- in einer linken Hälfte über die zwei Schalter wahlweise
   - eine Verbindung zu einem benachbarten Detektorelement in der gleichen Spalte und/oder
   - eine Verbindung zu einem benachbarten Detektorelement in einer linken benachbarten Spalte einer oberhalb benachbarten Zeile herstellbar ist und
   - in einer rechten Hälfte über die zwei Schalter wahlweise
   - eine Verbindung zu einem benachbarten Detektorelement in der gleichen Spalte und/oder
   - eine Verbindung zu einem benachbarten Detektorelement in einer rechten benachbarten Spalte einer oberhalb benachbarten Zeile herstellbar ist.

Das Speicherelement kann als eines der nachfolgenden Elemente ausgebildet sein: ROM, EPROM, EEPROM, FRAM, MRAM, SRAM, DRAM.

Die Detektorelemente können alle eine identische Grundfläche aufweisen.

Es ist möglich, dass die Detektorelemente benachbarter Zeilen fluchtend zueinander angeordnet sind.

Ferner ist es alternativ möglich, dass die Detektorelemente benachbarter Zeilen mit einem bestimmten Versatzabstand in Zeilenerstreckungsrichtung zueinander angeordnet sind.

Die Schalter und Speicherelemente können in einer möglichen Ausführungsform mindestens teilweise innerhalb der Fläche der Detektorelemente angeordnet sein.

Desweiteren kann alternativ jedem Schalter zur Ansteuerung genau ein Speicherelement zugeordnet werden.

Vorzugsweise wird eine Positionsmesseinrichtung mit einem erfindungsgemäßen Detektorelement-Array ausgestattet.

Weitere Einzelheiten und Vorteile der vorliegenden Erfindung seien anhand der nachfolgenden Beschreibung von Ausführungsbeispielen in Verbindung mit den Figuren erläutert.

Es zeigt
- Figur 1: eine schematisierte Darstellung einer optischen Positionsmesseinrichtung mit einem erfindungsgemäßen Detektorelement-Array;
- Figur 2: einen Ausschnitt eines Ausführungsbeispiels eines erfindungsgemäßen Detektorelement-Arrays in einer schematisierten Darstellung in Verbindung mit einer vergrößerten Detailansicht daraus;
- Figur 3: eine vergrößerte Ansicht eines alternatives Ausführungsbeispiels eines erfindungsgemäßen Detektorelement-Arrays;
- Figur 4: eine Gesamtansicht einer weiteren Ausführungsform eines erfindungsgemäßen Detektorelement-Arrays;
- Figur 5a: das Detektorelement-Array aus Fig. 4 in einem Verschaltungszustand, der zur Abtastung eines linearen Streifenmusters in der Detektionsebene geeignet ist;
- Figur 5b: das Detektorelement-Array aus Fig. 4 in einem Verschaltungszustand, der zur Abtastung eines winkligen Streifenmusters in der Detektionsebene geeignet ist;
- Figur 6: eine Gesamtansicht einer weiteren Ausführungsform eines erfindungsgemäßen Detektorelement-Arrays.

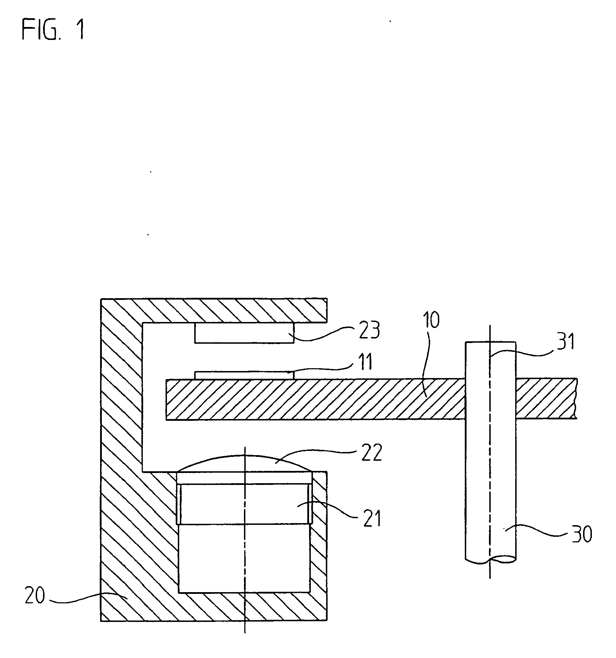

In Figur 1 ist in einer stark schematisierten Darstellung eine rotatorische optische Positionsmesseinrichtung dargestellt, die mit einem erfindungsgemäßen Detektorelement-Array 23 ausgestattet ist. Die Positionsmesseinrichtung dient zur Erzeugung von Positionsinformationen bzgl. der Relativbewegung eines um die Achse 31 rotierender Objektes, das in der Figur nicht dargestellt ist. Eine derartige -einrichtung kann etwa in Werkzeugmaschinen oder in elektrischen Antrieben zum Einsatz kommen und liefert dort Positionsinformationen bzgl. des rotierenden Objekts für eine übergeordnete Steuereinheit .

Die dargestellte Positionsmesseinrichtung umfasst zum einen eine Teilscheibe 10, auf der eine inkrementale Messteilung 11 angeordnet ist. Die Messteilung 11 besteht aus einer kreisringförmig um die Achse 31 angeordneten Spur mit alternierenden durchlässigen und nicht-durchlässigen Teilbereichen, welche jeweils rechteckförmig ausgestaltet sind; die undurchlässigen Teilbereiche können etwa mit einer Chrom-Beschichtung versehen sein. Die Teilscheibe 10 ist zentriert an einer um die Rotationsachse 31 rotierenden Welle 30 angeordnet und besteht aus Glas oder Kunststoff. Die Welle 30 ist mit einem rotierenden Objekt, beispielsweise mit der Welle eines elektrischen Antriebs, verbunden.

Zum anderen umfasst die Positionsmesseinrichtung eine Abtasteinheit 20, die im vorliegenden Beispiel stationär gegenüber der rotierenden Teilscheibe 10 angeordnet ist. Zur Abtasteinheit 20 gehören eine Lichtquelle 21 mit einer vorgeordneten Kollimatoroptik 22 sowie das erfindungsgemäß ausgestaltete Detektorelement-Array 23, welche z.B. in einem geeigneten Gehäuse platziert werden.

Im dargestellten Ausführungsbeispiel mit einer sog. Durchlichtabtastung ist die Teilscheibe 10 bzw. die Messteilung 11 zwischen der Lichtquelle 21 und dem Detektorelement-Array 23 angeordnet. Nach dem Durchstrahlen der Messteilung 11 resultiert in der Detektionsebene in diesem Beispiel ein periodisches Streifenmuster im Schattenwurf, welches im Fall der Rotation der Teilscheibe 10 um die Achse 31 verschiebungsabhängig moduliert, über das in der Detektionsebene angeordnete Detektorelement-Array 23 erfasst und in geeignete Abtastsignale umgesetzt wird. Die resultierenden positionsabhängigen Abtastsignale, z.B. zwei um 90° phasenversetzte Inkrementalsignale, werden in einer nicht-dargestellten Steuereinheit in bekannter Art und Weise weiterverarbeitet.

Es sei an dieser Stelle ausdrücklich darauf hingewiesen, dass das erfindungsgemäße Detektorelement-Array 23 selbstverständlich auch in anderen Positionsmesseinrichtungen als in der dargestellten rotatorischen Variante eingesetzt werden kann. So ermöglichen die erfindungsgemäßen Maßnahmen insbesondere die Verwendung des hardware-mäßig identischen Detektorelement-Arrays 23 in einer linearen Positionsmesseinrichtung. Hierbei wird eine sich linear erstreckende Messteilung von einer Abtasteinheit mit dem gleichen Detektorelement-Array 23 abgetastet, das dann eine auf den linearen Fall eingestellte Abtastkonfiguration aufweist.

Ebenso ist die Verwendung des erfindungsgemäßen Detektorelement-Arrays natürlich nicht auf die dargestellte Durchlichtabtastung beschränkt, sondern kann auch in Verbindung mit Auflichtabtastungen eingesetzt werden.

Ferner sei darauf hingewiesen, dass die Erzeugung des Streifenmusters in der Detektionsebene nicht unbedingt - wie im erläuterten Beispiel der Figur 1 - im Schattenwurf erfolgen muss, sondern derartige Streifenmuster auch über andere Wechselwirkungsmechanismen zwischen den von einer Lichtquelle gelieferten Strahlenbündeln und ein oder mehreren Gittern im Abtaststrahlengang erzeugt werden können.

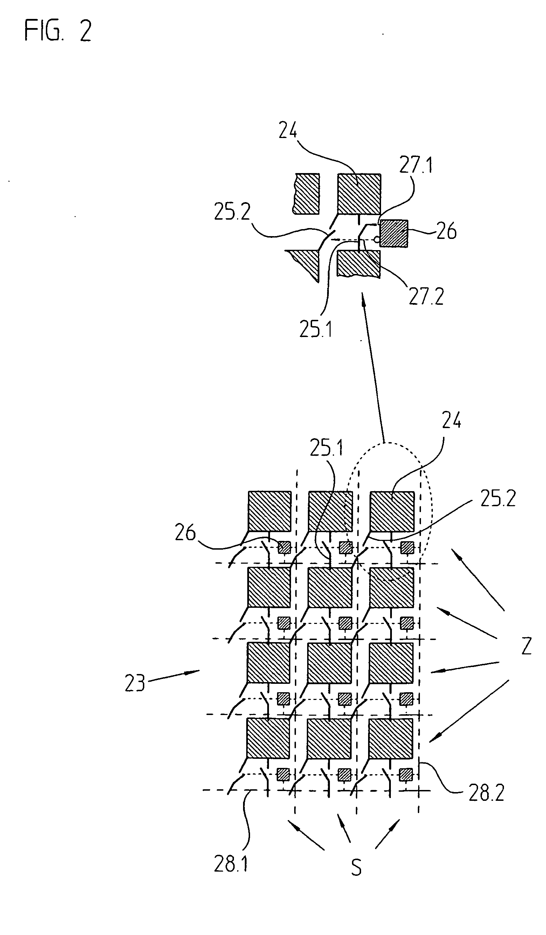

In Figur 2 ist eine Teilansicht des Detektorelement-Arrays 23 aus Figur 1 sowie eine vergrößerte Ansicht eines Ausschnitts desselben gezeigt. Anhand dieser Darstelllungen soll nachfolgend der grundsätzliche Aufbau des erfindungsgemäßen Detektorelement-Arrays 23 erläutert werden.

Das erfindungsgemäße Detektorelement-Array 23 besteht aus mehreren, matrixartig in Zeilen Z und Spalten S angeordneten lichtempfindlichen Detektorelementen 24, die beispielsweise als Photodioden ausgebildet sind. Die Detektorelemente 24 benachbarter Zeilen Z sind in der gezeigten Variante hierbei allesamt fluchtend zueinander angeordnet.

In der dargestellten Ausführungsform eines erfindungsgemäßen Detektorelement-Arrays 23 besitzen die Detektorelemente 24 jeweils eine identische, quadratische Grundfläche; grundsätzlich können natürlich auch andere Geometrien für die Grundflächen in Betracht gezogen werden, beispielsweise rechteckförmige, trapezförmige oder ellipsenförmige Grundflächen etc..

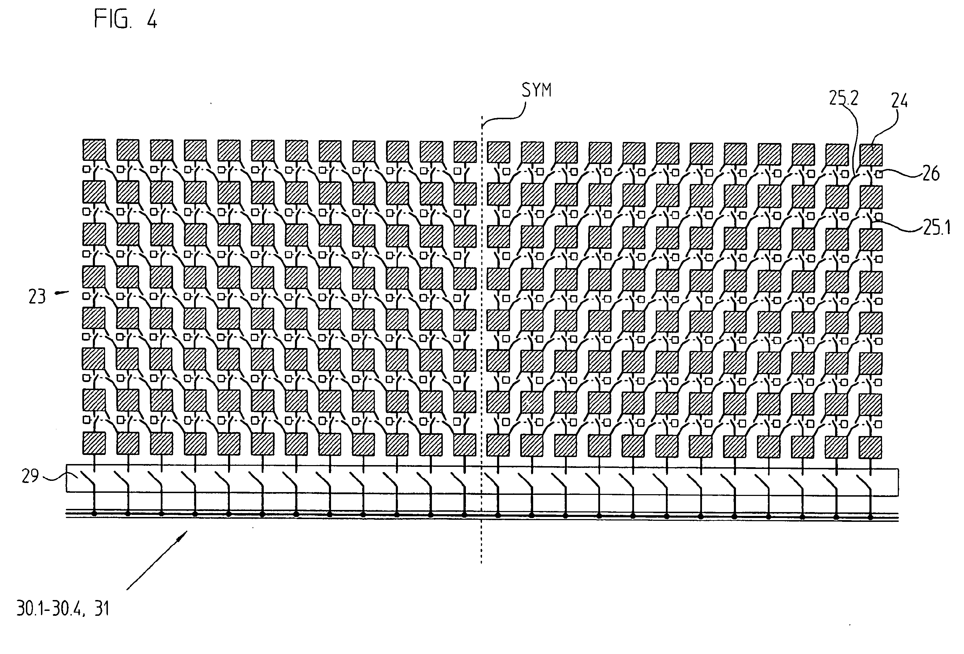

Zumindest einem Teil der Detektorelemente 24 des Detektorelement-Arrays 23 sind jeweils im allgemeinen Fall nicht mehr als zwei, im vorliegenden Beispiel genau zwei Schalter 25.1, 25.2 zugeordnet, über die das jeweilige Detektorelement 24 wahlweise unmittelbar mit zwei benachbarten Detektorelementen 24 verbindbar ist. Wie aus dem nachfolgend noch zu beschreibenden Beispiel der Figur 4 ersichtlich werden wird, können etwa in den begrenzenden Zeilen Z und Spalten S des Detektorelement-Arrays 23 einzelne Detektorelemente 24 angeordnet sein, denen nicht unbedingt zwei derartige Schalter 25.1, 25.2 zugeordnet sein müssen. Erfindungsgemäß lässt sich über die beiden Schalter 25.1, 25.2 wahlweise eine unmittelbare Verbindung zu einem benachbarten Detektorelement 24 in der gleichen Spalte S und/oder eine unmittelbare Verbindung zu einem schräg benachbarten Detektorelement 24 in einer benachbarten Spalte S einer benachbarten Zeile Z herstellen. Letztere ist insbesondere zur Abtastung von winkligen Streifenmustern in rotatorischen Systemen von Vorteil.

Für das in der unteren Hälfte der Figur 2 dargestellte Beispiel bedeutet dies, dass etwa das Detektorelement 24 in der mittleren Spalte S sowie in der zweiten Zeile Z von oben über den Schalter 25.1 unmittelbar mit dem darüber angeordneten Detektorelement 24 in der gleichen Spalte S in der benachbarten (ersten) Zeile Z verbindbar ist; über den Schalter 25.2 ist hingegen dieses Detektorelement 24 unmittelbar mit dem schräg darüber angeordneten Detektorelement 24 in der benachbarten (rechten) Spalte S in der benachbarten (ersten) Zeile Z verbindbar. Aufgrund der unmittelbaren Verbindung benachbarter Detektorelemente 24 über die zwei Schalter 25.1, 25.2 entfallen im Unterschied zum Stand der Technik somit komplexe Verschaltungslogiken, d.h. es resultiert ein signifikant vereinfachter Aufbau.

Die Schalter zur unmittelbaren (vertikalen) Verbindung benachbarter Detektorelemente 24 unterschiedlicher Zeilen Z, aber gleicher Spalten S seien nachfolgend allesamt mit dem Bezugszeichen 25.1 versehen, die Schalter zur unmittelbaren (schrägen) Verbindung benachbarter Detektorelemente 24 benachbarter Zeilen Z und benachbarter Spalten S werden in diesem Beispiel mit dem Bezugszeichen 25.2 versehen.

Pro Detektorelement 24 sind im erfindungsgemäßen Detektorelement-Array 23 demzufolge nur zwei Schalter 25.1, 25.2 vorgesehen, um darüber unterschiedliche Abtastkonfigurationen einzustellen. Bei den beiden maßgeblichen Abtastkonfigurationen handelt es sich mindestens um eine erste Abtastkonfiguration für ein Streifenmuster in der Detektionsebene, das aus lauter parallel zueinander angeordneten Streifen in Spaltenrichtung besteht sowie um eine zweite Abtastkonfiguration, bei der das abgetastete Streifenmuster aus winklig zueinander angeordneten Streifen besteht. Selbstverständlich ist es möglich, das erfindungsgemäße Detektorelement-Array 23 an die beiden erwähnten Abtastkonfigurationen mit unterschiedlichen Geometrieparametern der entsprechenden Streifenmuster anzupassen. Das bedeutet etwa, dass parallele Streifenmuster in der Detektionsebene mit unterschiedlichen Streifenmusterperiodizitäten mit einem entsprechend angepassten Detektorelement-Array 23 abgetastet werden können; ebenso können winklig orientierte Streifenmuster mit unterschiedlichen Winkeln mit einem geeignet angepassten erfindungsgemäßen Detektorelement-Array 23 abgetastet werden.

In den verschiedenen Abtastkonfigurationen werden über die Schalter 25.1, 25.2 demzufolge die Detektorelemente 24 in unterschiedlichen Verschaltungs-Varianten miteinander verbunden, abhängig von der Geometrie des damit abzutastenden Streifenmuster in der Detektionsebene. Es resultieren damit jeweils mehrere Gruppen von miteinander verbundenen Detektorelementen 24, die bei der Abtastung eines verschiebungsabhängig modulierten Streifenmusters zueinander phasenverschobene Abtastsignale erzeugen; innerhalb jeder verschalteten Gruppe liegen an den Detektorelementen 24 jeweils phasengleiche Abtastsignale an. Typischerweise werden vier derartige Gruppen gebildet, die jeweils aus Detektorelementen 24 bestehen, die über die entsprechenden Schalter 25.1, 25.2 miteinander verbunden sind und jeweils um 90° phasenverschobene Abtastsignale liefern. Möglich ist alternativ hierzu auch, dass drei Gruppen von verschalteten Detektorelementen vorgesehen werden, die um 120° phasenversetzte Abtastsignale liefern oder aber eine geeignete Verschaltung zur Abtastung von Pseudo-Random-Codes, Gray-Codes oder Referenzmarkierungen auf der Seite der Maßverkörperung erfolgt.

Die Detektorelemente 24 jeder Gruppe sind mit einer Verbindungsleitung elektrisch leitend verbunden, die in Figur 2 nicht dargestellt sind. Die vier oder drei Verbindungsleitungen der verschiedenen Gruppen sind z.B. seitlich benachbart zum Detektorelement-Array 23 angeordnet. Zwischen dem Detektorelement-Array 23 und den Verbindungsleitungen ist ferner vorzugsweise ein Kanal-Multiplexer angeordnet, über den die verbundenen Detektorelemente 24 einer Gruppe mit phasengleichen Abtastsignalen jeweils auf die gleiche Verbindungsleitung aufschaltbar sind. Innerhalb der belegten Fläche des Detektorelement-Arrays 23 sind im dargestellten Beispiel demzufolge keine weiteren Verbindungsleitungen erforderlich, da innerhalb des Detektorelement-Arrays 23 die verbundenen Detektorelemente 24 als Durchleitelemente für die erzeugten Photoströme fungieren. Über die Verbindungsleitungen werden die Abtastsignale der verschiedenen Gruppen einer nachgeordneten Folgeelektronik zur Weiterverarbeitung zugeführt.

Jedem Detektorelement 24 ist im erfindungsgemäßen Detektorelement-Array 23 ferner ein Speicherelement 26 zugeordnet, in dem Informationen abgelegt werden, die angeben, mit welchen benachbarten Detektorelementen 24 über die zwei Schalter 25.1, 25.2 ein bestimmtes Detektorelement 24 in einer eingestellten Abtastkonfiguration unmittelbar verbunden ist. Die Speicherelemente 26 dienen demzufolge zum Ansteuern der beiden Schalter 25.1, 25.2 als auch zum Abspeichern der Information, welche Schaltzustände für die beiden Schalter 25.1, 25.2 in der jeweiligen Abtastkonfiguration gerade aktiviert sind.

Wie aus der vergrößerten Ausschnittsdarstellung in Figur 2 hervorgeht, ist zu diesem Zweck jedes Speicherelement 26 über je eine Steuerleitung 27.1, 27.2 mit einem der beiden zugeordneten Schalter 25.1, 25.2 verbunden. Im dargestellten Ausführungsbeispiel besitzt das Speicherelement 26 einen invertierenden und einen nicht-invertierenden Ausgang, mit denen jeweils eine der beiden Steuerleitungen 27.1, 27.2 verbunden ist.

Um die Speicherelemente 26 im erfindungsgemäßen Detektorelement-Array 23 über eine übergeordnete Steuerlogik geeignet ansteuern bzw. ansprechen zu können, weist das Detektorelement-Array 23 ferner zwischen den Spalten S und Zeilen Z der Detektorelemente 24 angeordnete Programmierleitungen 28.1, 28.2 auf. Mit dem Bezugszeichen 28.1 werden hierbei horizontal verlaufende Programmierleitungen für die verschiedenen Zeilen des Detektorelement-Arrays 23 bezeichnet, mit dem Bezugszeichen 28.2 werden die vertikal verlaufenden Programmierleitungen für die verschiedenen Spalten des Detektorelement-Arrays 23 bezeichnet.

Als Speicherelemente 26 kommen im erfindungsgemäßen Detektorelement-Array 23 beispielsweise PROMs, EPROMs, EEPROMs, FRAMs, MRAMs, SRAMs, DRAMs etc. in Betracht. Es können demzufolge sowohl flüchtige wie auch nichtflüchtige Speicherelemente 26 verwendet werden; im Fall flüchtiger Speicherelemente 26 muss dann lediglich sichergestellt werden, dass die Informationen der Speicherelemente 26 in einer separaten Speichereinheit abgelegt werden, um diese im Fall eines evtl. erforderlichen System-Neustarts nach einer Versorgungs-Unterbrechung für eine bestimmte Abtastkonfiguration wieder verfügbar zu haben.

Alternativ zur erläuterten Variante mit einem Speicherelement pro Detektorelement und zwei Schaltern ist es im Rahmen der vorliegenden Erfindung auch möglich, pro Schalter ein Speicherelement zur Verfügung zu stellen. Es würde dann über ein Speicherelement jeweils genau ein Schalter angesteuert. Im Fall einer derartigen Realisierung würde dann die oben erwähnte Invertierung innerhalb eines Speicherelements entfallen.

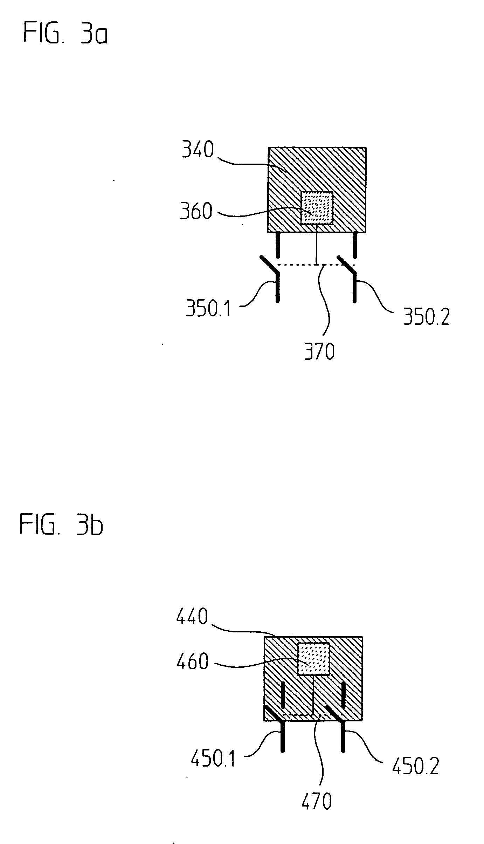

Zwei weitere alternative Ausführungsformen eines erfindungsgemäßen Detektorelement-Arrays sei nachfolgend anhand der schematischen Ausschnitts-Darstellungen in den Figuren 3a und 3b erläutert. Die Figuren zeigen hierbei jeweils ein einzelnes Detektorelement 340, 440 sowie zugeordnete Schalter 350.1, 350.2, 450.1, 450.2, Speicherelemente 360, 460 und Steuerleitungen 370, 470 dieser Ausführungsformen erfindungsgemäßer Detektorelement-Arrays.

Während im oben erläuterten Beispiel der Figur 2 die den Detektorelementen zugeordneten Komponenten allesamt außerhalb der durch die Detektorelemente belegte Fläche angeordnet waren, ist nunmehr vorgesehen, im Beispiel der Figur 3a das Speicherelement 360 im Bereich der Fläche des Detektorelements 340 anzuordnen; die beiden zugeordneten Schalter 350.1, 350.2 befinden sich außerhalb dieses Bereiches benachbart zum Detektorelement angeordnet.

Im Beispiel der Figur 4a sind darüberhinaus neben dem Speicherelement 460 auch noch die Schalter 450..1, 450.2 und die Steuerleitung 470 im Bereich der Fläche des Detektorelements 440 angeordnet.

Es ist im Rahmen der vorliegenden Erfindung demzufolge möglich, die Schalter und Speicherelemente im Detektorelement-Array mindestens teilweise innerhalb der Fläche der Detektorelemente anzuordnen. Auf diese Art und Weise ist eine kompakte Ausbildung des Detektorelement-Arrays möglich, die gleichzeitig eine hohe Pixeldichte pro Fläche gewährleistet. Die Schalter und Speicherelemente beeinflussen die Funktion der Detektorelemente hierbei nicht wesentlich.

Figur 4 zeigt schließlich das vollständige Detektorelement-Array 23, wie es in den beiden Figuren 1 und 2 bereits zum Teil erläutert wurde. Das dargestellte Detektorelement-Array 23 umfasst insgesamt 192 Detektorelemente 24, die wie oben erläutert matrixartig in 8 Zeilen sowie in 24 Spalten angeordnet sind. Während in dieser Darstellung die Programmierleitungen aus Gründen der besseren Übersichtlichkeit nicht eingezeichnet wurde, sind nunmehr am unteren Randbereich des Detektorelement-Arrays 23 insgesamt fünf Verbindungsleitungen 30.1 - 30.4, 31 schematisiert angedeutet. Mit jeder Verbindungsleitung 30.1 - 30.4 sind jeweils diejenigen Detektorelemente 24 verbunden, die bei der Abtastung eines Streifenmusters phasengleiche Abtastsignale liefern. Im verschalteten Zustand liefert etwa die Verbindungsleitung 30.1 das sog. 0°-Abtastsignal, die Verbindungsleitung 30.2 das sog. 90°-Abtastsignal, die Verbindungsleitung 30.3 das sog. 180°-Abtastsignal und die Verbindungsleitung 30.4 das sog. 270°-Abtastsignal. Zwischen den Verbindungsleitungen 30.1 - 30.4 und den Detektorelementen 24 ist - wie bereits oben angedeutet - der Kanalmultiplexer 29 angeordnet, über den die verschiedenen Gruppen der verbundenen Detektorelemente 24 mit phasengleichen Abtastsignalen jeweils auf die gleiche Verbindungsleitung 30.1 - 30.4 aufgeschaltet werden.

Eine fünfte Verbindungsleitung 31 dient z.B. zum Zusammenschalten von Detektorelementen 24 die etwa insbesondere bei der Abtastung winkliger Streifenmuster keine brauchbaren Abtastsignale mit einer definierten Phasenlage liefern.

Wie aus Figur 4 ersichtlich ist, besitzen die links und rechts von einer Symmetrielinie S angeordneten Detektorelemente 24 dieses DetektorelementArrays 23 jeweils unterschiedlich angeordnete Schalter 25.2, die jedes Detektorelement 24 mit einem schräg benachbarten Detektorelement 24 in einer anderen Spalte und einer anderen Zeile verbindet. Die Schalter 25.1 zur optionalen Verbindung benachbarter Detektorelemente einer Spalte sind in den Detektorelement-Array-Teilbereichen links und rechts von der Symmetrielinie S identisch.

Im linken Detektorelement-Array-Teilbereich sind die Schalter 25.2 der Detektorelemente 24 jeweils an der linken oberen Ecke der Detektorelemente 24 angeordnet. Das bedeutet, dass darüber - von der Symmetrielinie S aus gesehen - jedes innere Detektorelement 24 mit dem (schräg) links oberhalb benachbarten Detektorelement 24 der benachbarten Zeile und der benachbarten Spalte in einer entsprechenden Abtastkonfiguration verbindbar ist. Alternativ zu dieser Anordnung der Schalter 25.2 wäre es selbstverständlich auch möglich, diese Schalter an der rechten unteren Ecke der Detektorelemente 24 anzuordnen, um Detektorelemente 24 mit Detektorelementen 24 in einer benachbarten Zeile und in einer benachbarten Spalte zusammenzuschalten.

Hingegen sind im rechten Detektorelement-Array-Teilbereich die Schalter 25.1 der Detektorelemente 24 jeweils an der rechten oberen Ecke der Detektorelemente 24 angeordnet. Das bedeutet, dass darüber - von der Symmetrielinie S aus gesehen - jedes innere Detektorelement 24 mit dem (schräg) rechts oberhalb benachbarten Detektorelement 24 der benachbarten Zeile und der benachbarten Spalte in einer gewünschten Abtastkonfiguration verbindbar ist. Auch hier wäre es alternativ zur gezeigten Anordnung der Schalter 25.2 möglich, diese Schalter 25.2 an der linken unteren Ecke der Detektorelemente 24 anzuordnen, um Detektorelemente 24 mit Detektorelementen 24 in einer benachbarten Zeile und in einer benachbarten Spalte zusammenzuschalten.

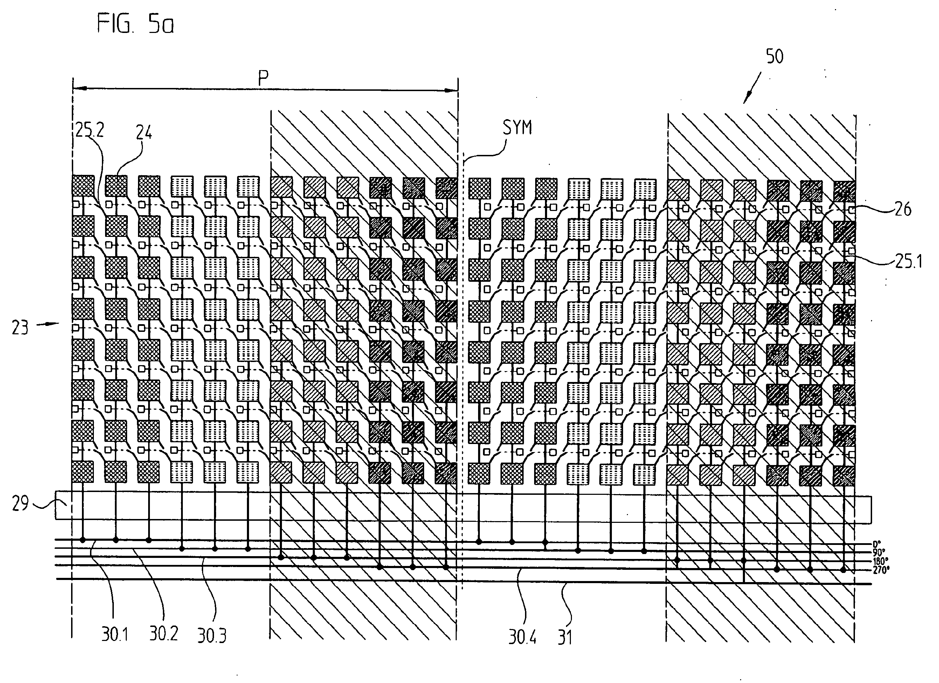

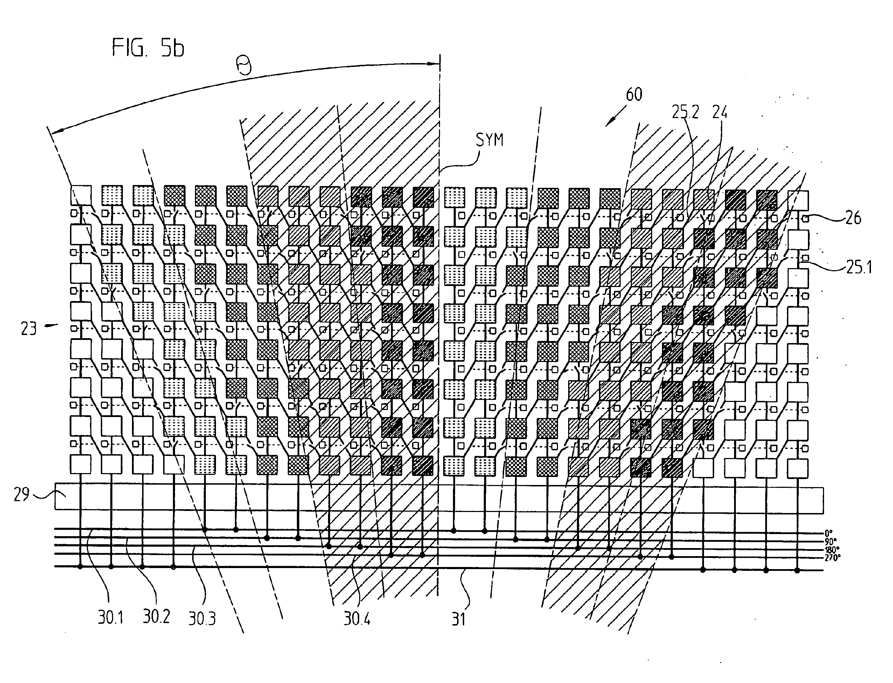

Wie das Detektorelement-Array 23 aus Figur 4 nunmehr in zwei unterschiedlichen Abtastkonfigurationen verschaltet wird, sei nachfolgend anhand der Figuren 5a und 5b veranschaulicht. In den beiden Figuren 5a und 5b sind miteinander verschaltete Detektorelemente 24 des Detektorelement-Arrays 23, die bei der Abtastung der jeweiligen Streifenmuster phasengleiche Abtastsignale erzeugen, in der gleichen Art und Weise gekennzeichnet.

Figur 5a zeigt das entsprechende Detektorelement-Array 23, verschaltet in einer Abtastkonfiguration für ein in der Detektionsebene resultierendes paralleles Streifenmuster 60, das eine Periodizität P aufweist. Wie ersichtlich, sind in dieser Abtastkonfiguration alle Schalter 25.1 geschlossen, die die Detektorelemente 24 einer Spalte miteinander verbinden, während alle anderen Schalter 25.2 geöffnet sind. Je drei benachbarte Spalten von Detektorelementen 24 werden über den Kanalmultiplexer 29 auf eine gemeinsame Verbindungsleitung 30.1 - 30.4 geschaltet. Die von links gesehen ersten drei Spalten von Detektorelementen 24, die in einer halben Periode P des Streifenmusters 50 liegen, liefern auf der Verbindungsleitung 30.1 das 0°-Abtast-signal, die Detektorelemente 24 der vierten bis sechsten Spalte liefern auf der Verbindungsleitung 30.2 das 90°-Abtastsignal, die Detektorelemente 24 der siebten bis neunten Spalte liefern auf der Verbindungsleitung 30.3 das 180°-Abtastsignal und die Detektorelemente der zehnten bis zwölften Spalte liefern auf der Verbindungsleitung 30.4 das 270°-Abtastsignal; die Detektorelemente 24 der nächsten drei Spalten liefern wieder ein 0°-Abtastsignal und werden wieder auf die Verbindungsleitung 31.1. geschaltet usw..

Selbstverständlich kann alternativ hierzu auch eine andere gruppenweise Verschaltung der Spalten erfolgen.

Eine derartige Abtastkonfiguration des erfindungsgemäßen Detektorelement-Arrays 23 kann etwa dann genutzt werden, wenn das -Array 23 in der Abtasteinheit einer linearen Positionsmesseinrichtung eingesetzt wird und ein paralleles Streifenmuster in einer Detektionsebene erfasst und in verschiebungsabhängige, phasenverschobene Abtastsignale umgesetzt werden soll.

Das hardware-mäßig identische Detektorelement-Array 23 kann nunmehr auch in einer Abtastkonfiguration eingesetzt werden, wenn ein winkliges Streifenmuster in der Detektionsebene abzutasten ist. Figur 5b zeigt das Detektorelement-Array 23 in einer derartigen Abtastkonfiguration zusammen mit dem winkligen Streifenmuster 60, welches eine Winkelperiodizität θ aufweist. Ein derartiges winkliges Streifenmuster 60 kann etwa im Fall einer rotatorischen Positionsmesseinrichtung aufgrund der Wechselwirkung von Strahlenbündeln mit einer oder mehreren Gittern im Abtaststrahlengang resultieren, wenn z.B. mindestens eines dieser Gitter rotationssymmetrisch ausgebildet ist.

Wie aus der Figur 5b ersichtlich ist, ist in den beiden Detektorelement-Array-Hälften links und rechts von der Symmetrielinie SYM aufgrund des winkligen Streifenmusters 60 eine unterschiedliche Verschaltung der verschiedenen Detektorelemente 24 vorgesehen. So werden in der linken Hälfte des Detektorelement-Arrays 23 über die zwei Schalter 25.1, 25.2 wahlweise eine Verbindung zu einem benachbarten Detektorelement 24 in der gleichen Spalte und/oder eine Verbindung zu einem schräg benachbarten Detektorelement 24 in einer linken benachbarten Spalte einer oberhalb benachbarten Zeile hergestellt. In der rechten Hälfte des Detektorelement-Arrays 23 hingegen werden über die zwei Schalter 25.1, 25.2 wahlweise eine Verbindung zu einem benachbarten Detektorelement 24 in der gleichen Spalte und/oder eine Verbindung zu einem schräg benachbarten Detektorelement 24 in einer rechten benachbarten Spalte einer oberhalb benachbarten Zeile hergestellt.

Die in einer halben Winkelperiode θ/2 des Streifenmusters 60 liegenden, miteinander verschalteten Detektorelemente werden über den Kanalmultiplexer 29 auf eine gemeinsame Verbindungsleitung 30.1 - 30.4 geschaltet, so dass ausgangsseitig wiederum vier phasenversetzte Abtastsignale in Form eines 0°-Abtastsignals, eines 90°-Abtastsignals, eines 180°-Abtastsignals sowie eines 270°-Abtastsignals zur Verfügung stehen.

Im Fall einer Abtastkonfiguration für ein winkliges Streifenmuster hat es sich zudem als vorteilhaft erwiesen, wenn die am Rand befindlichen Detektorelemente 24 im erfindungsgemäßen Detektorelement-Array 23 nicht zur Abtastung des Streifenmusters genutzt werden, sondern auf die Verbindungsleitung 31 zusammengeschaltet werden. Andernfalls würden Fehler bzgl. der gewünschten Phasenlagen der verschiedenen Abtastsignale resultieren.

Neben dem detailliert erläuterten Beispiel gibt es im Rahmen der vorliegenden Erfindung natürlich noch weitere Möglichkeiten zur Ausgestaltung des erfindungsgemäßen Detektorelement-Arrays.

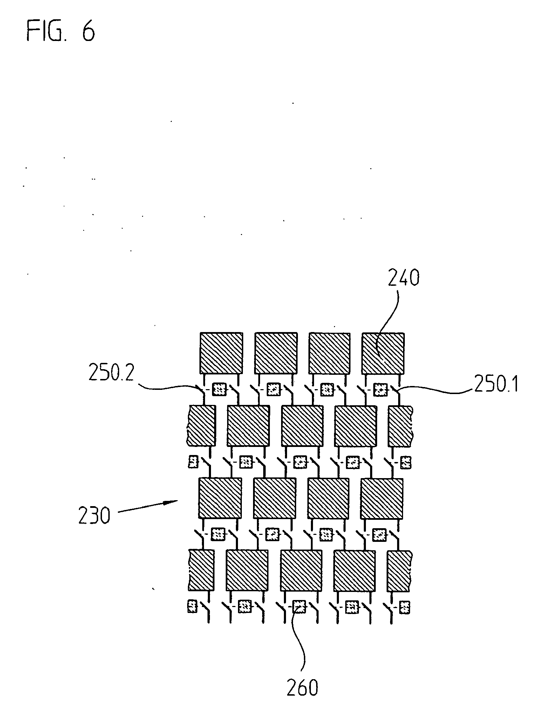

Ein Ausschnitt aus einer weiteren Variante eines erfindungsgemäßen Detektorelement-Arrays ist in Figur 6 gezeigt. Diese Variante unterscheidet sich von den oben erläuterten i.w. durch die Anordnung der Detektorelemente 240. Während im obigen Beispiel die Detektorelemente benachbarter Zeilen fluchtend zueinander angeordnet sind, ist bei der vorliegenden Variante vorgesehen, die Detektorelemente benachbarter Zeilen mit einem bestimmten Versatzabstand in Zeilenerstreckungsrichtung zueinander anzuordnen. Zumindest einem Teil der Detektorelemente 24 sind wiederum jeweils zwei Schalter 250.1, 250.2 zugeordnet, die es ermöglichen, das jeweilige Detektorelement 240 mit schräg darunter oder darüber angeordneten Detektorelementen 240 je nach benötigter Abtastkonfiguration zu verbinden. Die Ansteuerung der Schalter 250.1, 250.2 erfolgt ebenfalls wie oben erläutet mit Hilfe eines Speicherelements 260, welches zumindest einem Teil der Detektorelemente 240 zugeordnet ist. Besonders vorteilhaft an dieser Variante ist zu erwähnen, dass damit ein einfacheres Layout und eine ggf. höhere Pixeldichte erreichbar ist.

Im Hinblick auf weitere alternative Ausgestaltungen des erfindungsgemäßen Detektorelement-Arrays wäre anzuführen, dass die Verschaltung der Detektorelemente bzw. die für eine bestimmte Abtastvariante eingestellte Abtastkonfiguration nicht zwangsläufig statisch sein muss. Es ist mit Hilfe des erfindungsgemäßen Detektorelement-Arrays etwa möglich, auch während des Betriebs der damit ausgestatteten Positionsmesseinrichtung, die jeweilige Abtastkonfiguration zu ändern, um damit etwa eine dynamische Anpassung an sich verändernde Abtastbedingungen vorzunehmen. So kann dergestalt etwa eine Anpassung einer Abtastkonfiguration bei einer rotatorischen Positionsmesseinrichtung erfolgen, bei der die Teilscheibe mit der Maßverkörperung nicht exakt konzentrisch zur Rotationsachse angeordnet ist und die Abtastsignale ohne eine derartige Anpassung einen Exzentrizitätsfehler besitzen würden. Ähnlich könnte auch im Fall einer linearen Positionsmesseinrichtung ein Fehler korrigiert werden, der aufgrund einer Krümmung der Maßverkörperung in deren Längsrichtung vorliegt, indem das genutzte Detektorelement-Array während der Messung dynamisch an sich verändernde Abtastbedingungen angepasst wird.

Im Rahmen der vorliegenden Erfindung existieren neben den konkret beschriebenen Ausführungsbeispielen somit auch noch alternative Ausgestaltungsmöglichkeiten.

## Patentansprüche

1. Detektorelement-Array für eine optische Positionsmesseinrichtung, über das ein in einer Detektionsebene resultierendes Streifenmuster in elektrische Abtastsignale umsetzbar ist, bestehend aus mehreren, matrixartig in Zeilen (Z) und Spalten (S) angeordneten lichtempfindlichen Detektorelementen (24; 240),
- wobei zumindest einem Teil der Detektorelemente (24; 240; 340; 440) Schalter (25.1, 25.2; 250.1, 250.2; 350.1, 350.2; 450.1, 450.2) zugeordnet sind, über die jedes dieser Detektorelemente (24; 240; 340; 440) wahlweise mit ein oder mehreren benachbarten Detektorelementen (24; 240; 340; 440) verbindbar ist und
- wobei den Detektorelementen (24; 240; 340; 440) mit zugeordneten Schaltern mindestens ein Speicherelement (26; 260; 360; 460) zugeordnet ist, in dem Informationen ablegbar sind, die angeben, mit welchen benachbarten Detektorelementen (24; 240; 340; 440) über die Schalter (25.1, 25.2; 250.1, 250.2; 350.1, 350.2; 450.1, 450.2) ein bestimmtes Detektorelement (24; 240; 340; 440) in einer eingestellten Abtastkonfiguration verbunden ist,
**dadurch gekennzeichnet,**
**dass** den Detektorelementen (24; 240; 340; 440) mit zugeordneten Schaltern (25.1, 25.2; 250.1, 250.2; 350.1, 350.2; 450.1, 450.2) jeweils nicht mehr als zwei Schalter (25.1, 25.2; 250.1, 250.2; 350.1, 350.2; 450.1, 450.2) zugeordnet sind, über die wahlweise
- eine unmittelbare Verbindung zu einem benachbarten Detektorelement (24; 240; 340; 440) in der gleichen Spalte (S) und/oder
- eine unmittelbare Verbindung zu einem schräg benachbarten Detektorelement (24; 240; 340; 440) in einer benachbarten Spalte (S) einer benachbarten Zeile (Z) herstellbar ist.

2. Detektorelement-Array nach Anspruch 1, **dadurch gekennzeichnet, dass** seitlich benachbart zum Detektorelement-Array (23; 230) mehrere Verbindungsleitungen (30.1 - 30.5) angeordnet sind, mit denen jeweils eine über die Schalter (25.1, 25.2; 250.1, 250.2; 350.1, 350.2; 450.1, 450.2) verbundene Gruppe von Detektorelementen (24; 240; 340; 440) verbindbar ist,

3. Detektorelement-Array nach Anspruch 1, **dadurch gekennzeichnet, dass** die Detektorelemente (24; 240; 340; 440) einer Gruppe aus der Abtastung des Streifenmusters jeweils phasengleiche Abtastsignale erzeugen.

4. Detektorelement-Array nach Anspruch 2 und 3, **dadurch gekennzeichnet, dass** zwischen den Verbindungsleitungen (30.1 - 30.5) und dem Detektorelement-Array (23; 230) ein Kanal-Multiplexer (29) angeordnet ist, über den die verbundenen Detektorelemente (24; 240; 340; 440) der Gruppen mit phasengleichen Abtastsignalen jeweils auf die gleiche Verbindungsleitung (30.1 - 30.5) aufschaltbar sind.

5. Detektorelement-Array nach Anspruch 4, **dadurch gekennzeichnet, dass** die Detektorelemente (24; 240; 340; 440) dergestalt verschaltet sind, dass an vier Verbindungsleitungen (30.1 - 30.4) vier um 90° phasenversetzte Abtastsignale oder an drei Verbindungsleitungen drei um 120° phasenversetzte Abtastsignale anliegen.

6. Detektorelement-Array nach Anspruch 1, **dadurch gekennzeichnet, dass** jedes Speicherelement (26; 260; 360; 460) mit den zwei Schaltern (25.1, 25.2; 250.1, 250.2; 350.1, 350.2; 450.1, 450.2) über jeweils eine Steuerleitung (27.1, 27.2; 370; 470) verbunden ist.

7. Detektorelement-Array nach Anspruch 6, **dadurch gekennzeichnet, dass** jedes Speicherelement (26; 260) einen invertierenden und einen nicht-invertierenden Ausgang besitzt und jeder der Ausgänge mit einer Steuerleitung (27.1, 27.2) verbunden ist.

8. Detektorelement-Array nach Anspruch 1, **dadurch gekennzeichnet, dass** Programmierleitungen (28.1, 28.2) zwischen den Spalten (S) und Zeilen (Z) der Detektorelemente (24; 240) angeordnet und zum Ansteuern der Speicherelemente (26; 260; 360; 460) mit diesen verbunden sind, um darüber die Schalter (25.1, 25.2; 250.1, 250.2; 350.1, 350.2; 450.1, 450.2) wahlweise zu betätigen.

9. Detektorelement-Array nach Anspruch 1, **dadurch gekennzeichnet, dass** zur Abtastung eines periodischen Streifenmusters aus parallelen Streifen über die Schalter (25.1) jeweils nur Detektorelemente (24; 240) in einer Spalte (S) miteinander verbunden sind.

10. Detektorelement-Array nach Anspruch 1, **dadurch gekennzeichnet, dass** zur Abtastung eines periodischen Streifenmusters aus winklig angeordneten Streifen das Detektorelement-Array (23; 230) zwei spiegelsymmetrisch zu einer Symmetrieachse (SYM) ausgebildete Hälften aufweist, und bei Betrachtung aus Richtung der Symmetrieachse (SYM)
- in einer linken Hälfte über die zwei Schalter (25.1, 25.2; 350.1, 350.2; 450.1, 450.2) wahlweise
- eine Verbindung zu einem benachbarten Detektorelement (24; 240; 340) in der gleichen Spalte (S) und/oder
- eine Verbindung zu einem benachbarten Detektorelement (24) in einer linken benachbarten Spalte (S) einer oberhalb benachbarten Zeile (Z) herstellbar ist und
in einer rechten Hälfte über die zwei Schalter (25.1, 25.2; 350.1, 350.2; 450.1, 450.2) wahlweise
- eine Verbindung zu einem benachbarten Detektorelement (24; 340; 440) in der gleichen Spalte (S) und/oder
- eine Verbindung zu einem benachbarten Detektorelement (24; 340; 440) in einer rechten benachbarten Spalte (S) einer oberhalb benachbarten Zeile (Z) herstellbar ist.

11. Detektorelement-Array nach mindestens einem der vorhergehenden Ansprüche, **dadurch gekennzeichnet, dass** die Detektorelemente (24; 240; 360; 460) alle eine identische Grundfläche aufweisen.

12. Detektorelement-Array nach Anspruch 1, **dadurch gekennzeichnet, dass** die Detektorelemente (24) benachbarter Zeilen (Z) fluchtend zueinander angeordnet sind.

13. Detektorelement-Array nach Anspruch 1, **dadurch gekennzeichnet, dass** die Detektorelemente (240) benachbarter Zeilen (Z) mit einem bestimmten Versatzabstand in Zeilenerstreckungsrichtung zueinander angeordnet sind.

14. Detektorelement-Array nach Anspruch 1, **dadurch gekennzeichnet, dass** jedem Schalter zur Ansteuerung genau ein Speicherelement zugeordnet ist.

15. Positionsmesseinrichtung, **gekennzeichnet durch** ein Detektorelement-Array (23; 230) nach mindestens einem der vorangehenden Ansprüche.

## Claims

1. Detector element array for an optical position measuring device, which can be used to convert a striped pattern resulting in a detection plane into electrical scanning signals, consisting of a plurality of light-sensitive detector elements (24; 240) arranged in rows (Z) and columns (S) in the form of a matrix,
- switches (25.1, 25.2; 250.1, 250.2; 350.1, 350.2; 450.1, 450.2) being associated with at least some of the detector elements (24; 240; 340; 440) and being able to be used to selectively connect each of these detector elements (24; 240; 340; 440) to one or more adjacent detector elements (24; 240; 340; 440), and
- at least one storage element (26; 260; 360; 460) being associated with the detector elements (24; 240; 340; 440) with associated switches and being able to store information which indicates the adjacent detector elements (24; 240; 340; 440) to which a particular detector element (24; 240; 340; 440) is connected via the switches (25.1, 25.2; 250.1, 250.2; 350.1, 350.2; 450.1, 450.2) in a scanning configuration which has been set,
**characterized in that**
no more than two switches (25.1, 25.2; 250.1, 250.2; 350.1, 350.2; 450.1, 450.2) are respectively associated with the detector elements (24; 240; 340; 440) with associated switches (25.1, 25.2; 250.1, 250.2; 350.1, 350.2; 450.1, 450.2) and can be used to selectively establish
- a direct connection to an adjacent detector element (24; 240; 340; 440) in the same column (S) and/or
- a direct connection to an obliquely adjacent detector element (24; 240; 340; 440) in an adjacent column (S) of an adjacent row (Z).

2. Detector element array according to Claim 1, **characterized in that** a plurality of connecting lines (30.1-30.5) are arranged laterally adjacent to the detector element array (23; 230) and can be respectively used to connect a group of detector elements (24; 240; 340; 440) connected via the switches (25.1, 25.2; 250.1, 250.2; 350.1, 350.2; 450.1, 450.2).

3. Detector element array according to Claim 1, **characterized in that** the detector elements (24; 240; 340; 440) in a group respectively generate scanning signals which are in phase from the scanning of the striped pattern.

4. Detector element array according to Claims 2 and 3, **characterized in that** a channel multiplexer (29) is arranged between the connecting lines (30.1-30.5) and the detector element array (23; 230) and can be used to respectively connect the connected detector elements (24; 240; 340; 440) in the groups with scanning signals which are in phase to the same connecting line (30.1-30.5).

5. Detector element array according to Claim 4, **characterized in that** the detector elements (24; 240; 340; 440) are connected in such a manner that four scanning signals which are phase-shifted through 90° are applied to four connecting lines (30.1-30.4) or three scanning signals phase-shifted through 120° are applied to three connecting lines.

6. Detector element array according to Claim 1, **characterized in that** each storage element (26; 260; 360; 460) is connected to the two switches (25.1, 25.2; 250.1, 250.2; 350.1, 350.2; 450.1, 450.2) via a respective control line (27.1, 27.2; 370; 470).

7. Detector element array according to Claim 6, **characterized in that** each storage element (26; 260) has an inverting output and a non-inverting output and each of the outputs is connected to a control line (27.1, 27.2).

8. Detector element array according to Claim 1, **characterized in that** programming lines (28.1, 28.2) are arranged between the columns (S) and rows (Z) of the detector elements (24; 240) and are connected to the storage elements (26; 260; 360; 460) for the purpose of driving the latter in order to selectively actuate the switches (25.1, 25.2; 250.1, 250.2; 350.1, 350.2; 450.1, 450.2) thereby.

9. Detector element array according to Claim 1, **characterized in that** only detector elements (24; 240) in one column (S) are respectively connected to one another via the switches (25.1) in order to scan a periodic striped pattern consisting of parallel stripes.

10. Detector element array according to Claim 1, **characterized in that,** in order to scan a periodic striped pattern consisting of stripes arranged in an angular manner, the detector element array (23; 230) has two halves which are mirror-symmetrical with respect to an axis of symmetry (SYM), and, when viewed from the direction of the axis of symmetry (SYM),
- a connection to an adjacent detector element (24; 240; 340) in the same column (S) and/or
- a connection to an adjacent detector element (24) in a left-hand adjacent column (S) of an adjacent row (Z) above can be selectively established
- in a left-hand half via the two switches (25.1, 25.2; 350.1, 350.2; 450.1, 450.2), and
- a connection to an adjacent detector element (24; 340; 440) in the same column (S) and/or
- a connection to an adjacent detector element (24; 340; 440) in a right-hand adjacent column (S) of an adjacent row (Z) above can be selectively established
in a right-hand half via the two switches (25.1, 25.2; 350.1, 350.2; 450.1, 450.2).

11. Detector element array according to at least one of the preceding claims, **characterized in that** the detector elements (24; 240; 360; 460) all have an identical base area.

12. Detector element array according to Claim 1, **characterized in that** the detector elements (24) in adjacent rows (Z) are arranged in a manner aligned with one another.

13. Detector element array according to Claim 1, **characterized in that** the detector elements (240) in adjacent rows (Z) are arranged with a particular offset distance with respect to one another in the direction of extent of the rows.

14. Detector element array according to Claim 1, **characterized in that** precisely one storage element is associated with each switch for driving.

15. Position measuring device, **characterized by** a detector element array (23; 230) according to at least one of the preceding claims.

## Revendications

1. Réseau d'éléments détecteurs destiné à un dispositif de mesure optique de position, au moyen duquel un motif de bandes apparaissant dans un plan de détection peut être converti en des signaux de balayage électriques, constitué d'une pluralité d'éléments détecteurs (24 ; 240) photosensibles agencés sous forme de matrice en lignes (Z) et en colonnes (S),
- dans lequel des commutateurs (25.1, 25.2 ; 250.1, 250.2 ; 350.1, 350.2 ; 450.1, 450.2) sont associés à au moins une partie des éléments détecteurs (24 ; 240 ; 340 ; 440), au moyen desquels chacun de ces éléments détecteurs (24 ; 240; 340 ; 440) peut être connecté de manière sélectionnée à un ou plusieurs éléments détecteurs voisins (24 ; 240 ; 340 ; 440), et
- dans lequel au moins un élément de mémoire (26 ; 260 ; 360 ; 460) est associé aux éléments détecteurs (24 ; 240; 340 ; 440) par des commutateurs associés, élément de mémoire dans lequel peuvent être stockées des informations qui indiquent à quels éléments détecteurs voisins (24 ; 240 ; 340 ; 440) un élément détecteur déterminé (24 ; 240 ; 340 ; 440) est connecté par l'intermédiaire des commutateurs (25.1, 25.2 ; 250.1, 250.2 ; 350.1, 350.2 ; 450.1, 450.2) dans une configuration de balayage réglée,
**caractérisé**
**en ce qu'**au plus deux commutateurs (25.1, 25.2 ; 250.1, 250.2 ; 350.1, 350.2 ; 450.1, 450.2) sont respectivement associés aux éléments détecteurs (24 ; 240 ; 340 ; 440) par des commutateurs (25.1, 25.2 ; 250.1, 250.2 ; 350.1, 350.2 ; 450.1, 450.2) associés, par l'intermédiaire desquels, de manière sélectionnée,
- une connexion directe peut être établie avec un élément détecteur voisin (24 ; 240 ; 340 ; 440) dans la même colonne (S) et/ou
- une connexion directe avec un élément détecteur voisin décalé (24 ; 240 ; 340 ; 440) peut être établie dans une colonne voisine (S) d'une ligne voisine (Z).

2. Réseau d'éléments détecteurs selon la revendication 1, **caractérisé en ce qu'**une pluralité de liaisons de connexion (30.1 - 30.5) sont disposées de manière latéralement adjacente au réseau d'éléments détecteurs (23 ; 230), conducteur de liaison au moyen desquelles peut être respectivement connecté un groupe d'éléments détecteurs (24 ; 240 ; 340 ; 440) connectés par l'intermédiaire des commutateurs (25.1, 25.2 ; 250.1, 250.2 ; 350.1, 350.2 ; 450.1, 450.2).

3. Réseau d'éléments détecteurs selon la revendication 1, **caractérisé en ce que** les éléments détecteurs (24 ; 240 ; 340 ; 440) d'un groupe génèrent respectivement à partir du balayage du motif de bandes des signaux de balayage en phase.

4. Réseau d'éléments détecteurs selon les revendications 2 et 3, **caractérisé en ce que**, entre les liaisons de connexion (30.1 - 30.5) et le réseau d'éléments détecteurs (23 ; 230) est disposé un multiplexeur de canaux (29) par l'intermédiaire duquel les éléments détecteurs connectés (24 ; 240 ; 340 ; 440) des groupes peuvent être respectivement activés par des signaux de balayage en phase sur la même liaison de connexion (30.1 - 30.5).

5. Réseau d'éléments détecteurs selon la revendication 4, **caractérisé en ce que** les éléments détecteurs (24 ; 240 ; 340 ; 440) sont commutés de telle manière que quatre signaux de balayage déphasés de 90° soient présents sur quatre liaisons de connexion (30.1 - 30.4) ou que trois signaux de balayage déphasés de 120° soient présents sur trois liaisons de connexion.

6. Réseau d'éléments détecteurs selon la revendication 1, **caractérisé en ce que** chaque élément de mémoire (26 ; 260 ; 360 ; 460) est connecté aux deux commutateurs (25.1, 25.2 ; 250.1, 250.2 ; 350.1, 350.2 ; 450.1, 450.2 par l'intermédiaire d'une liaison de commande (27.1, 27.2 ; 370 ; 470) respective.

7. Réseau d'éléments détecteurs selon la revendication 6, **caractérisé en ce que** chaque élément de mémoire (26 ; 260) comporte une sortie inverseuse et une sortie non inverseuse et **en ce que** chacune des sorties est connectée à une liaison de commande (27.1, 27.2).

8. Réseau d'éléments détecteurs selon la revendication 1, **caractérisé en ce que** des liaisons de programmation (28.1, 28.2) sont disposées entre les colonnes (S) et les lignes (Z) des éléments détecteurs (24 ; 240) et sont connectées aux éléments de mémoire (26 ; 260 ; 360 ; 460) afin de commander ces derniers de manière à actionner au moyen de ceux-ci les commutateurs (25.1, 25.2 ; 250.1, 250.2 ; 350.1, 350.2 ; 450.1, 450.2).

9. Réseau d'éléments détecteurs selon la revendication 1, **caractérisé en ce que**, pour le balayage d'un motif de bandes périodique constitué de bandes parallèles, seuls les éléments détecteurs (24 ; 240) d'une colonne (S) sont connectés les uns aux autres par l'intermédiaire des commutateurs (25.1).

10. Réseau d'éléments détecteurs selon la revendication 1, **caractérisé en ce que**, pour le balayage d'un motif de bandes périodique constitué de bandes agencées de manière inclinée, le réseau d'éléments détecteurs (23 ; 230) comprend deux moitiés réalisées de manière symétrique dans un miroir par rapport à un axe de symétrie (SYM) et, lorsqu'on l'observe dans la direction de l'axe de symétrie (SYM),
- dans une moitié gauche, au moyen des deux commutateurs (25.1, 25.2 ; 250.1, 250.2 ; 350.1, 350.2 ; 450.1, 450.2) et d'une manière sélectionnée,
- une connexion peut être établie avec un élément détecteur voisin (24 ; 240 ; 340) dans la même colonne (S) et/ou
- une connexion peut être établie avec un élément détecteur voisin (24) dans une colonne voisine de gauche (S) d'une ligne supérieure voisine (Z), et
dans une moitié droite, au moyen des deux commutateurs (25.1, 25.2 ; 250.1, 250.2 ; 350.1, 350.2 ; 450.1, 450.2) et d'une manière sélectionnée,
- une connexion peut être établie avec un élément détecteur voisin (24 ; 340 ; 440) dans la même colonne (S) et/ou
- une connexion peut être établie avec un élément détecteur voisin (24 ; 340 ; 440) dans une colonne voisine de droite (S) d'une ligne supérieure voisine (Z).

11. Réseau d'éléments détecteurs selon au moins l'une des revendications précédentes, **caractérisé en ce que** les éléments détecteurs (24 ; 240 ; 360 ; 460) présentent tous une même surface de base.

12. Réseau d'éléments détecteurs selon la revendication 1, **caractérisé en ce que** les éléments détecteurs (24) de lignes voisines (Z) sont disposés de manière alignée les uns par rapport aux autres.

13. Réseau d'éléments détecteurs selon la revendication 1, **caractérisé en ce que** les éléments détecteurs (240) de lignes voisines (Z) sont disposés en présentant les uns par rapport aux autres une distance de décalage déterminée dans la direction d'extension des lignes.

14. Réseau d'éléments détecteurs selon la revendication 1, **caractérisé en ce qu'**exactement un élément de mémoire est associé à chaque commutateur de commande.

15. Dispositif de mesure de position, **caractérisé par** un réseau d'éléments détecteurs (23 ; 230) selon au moins l'une des revendications précédentes.
